# EUROPEAN PATENT SPECIFICATION

(11) **EP 3 775 778 B1**
(45) Date of publication and mention of the grant of the patent: **05.05.2021**
(21) Application number: 19736921.8
(22) Date of filing: 24.06.2019
(51) Int. Cl.: G01C 21/34, G01C 21/36

(54) **SYSTEMS AND METHODS FOR EVALUATING NAVIGATION APPLICATION PERFORMANCE**
SYSTEME UND VERFAHREN ZUR BEWERTUNG DER NAVIGATIONSANWENDUNGSLEISTUNG
SYSTÈMES ET PROCÉDÉS D'ÉVALUATION DES PERFORMANCES D'UNE APPLICATION DE NAVIGATION

(43) Date of publication of application: 17.02.2021
(73) Proprietor: Google LLC, Mountain View, CA 94043 (US)
(72) Inventor: JOHN, John Payyappillil, Mountain View, CA 94043 (US); GHERMAN, Sorin, Mountain View, CA 94043 (US); DILLARD, Scott, Mountain View, CA 94043 (US)
(74) Representative: Shipp, Nicholas
(86) International application number: PCT/US2019/038657
(87) International publication number: WO 2020/263213

(56) References cited:
- US-A1- 2015 279 218
- US-A1- 2017 030 728

## Description

### FIELD OF THE DISCLOSURE

The present disclosure relates to digital mapping data and, more particularly, to evaluating the performance of route determination methods in navigation applications.

### BACKGROUND

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

Today, software applications executing in computers, smartphones, embedded devices, etc., generate step-by-step navigation directions which may include traffic data. Typically, a user specifies a starting location and a destination location, and a software application displays the directions immediately and/or as the user travels from the starting location to the destination location. The software application typically generates directions for a route which takes the user to the destination location in the shortest amount of time. The shortest amount of time may be based on predicted amounts of time for traversing various segments of the route.

US2017030728 A1 discloses a navigation application configured to calculate a hindsight energy consumption for a trip.

US2015279218 A1 discloses a navigation application configured to calculate a hindsight optimal flight plan for an aircraft.

### SUMMARY

To evaluate the performance of a navigation application that generates routes from starting locations to destination locations, a performance evaluation server receives indications of several routes generated by a navigation application operating on client devices of several users. For each route, the performance evaluation server also receives an indication of a predicted amount of time for traversing the route generated by the navigation application and an indication of the date and time or the time period in which the user requested navigation directions to the destination location. Furthermore, when a user agrees to share location and other sensor data, the performance evaluation server obtains positioning data and other sensor data from the client device of the user traveling to the destination location and from client devices of other users who agree to share location and other sensor data.

Based on the positioning data and/or other sensor data, the performance evaluation server determines the actual amount of time it took for the user to travel to the destination location after the user arrives at the destination location. Also based on the positioning data and/or other sensor data, the performance evaluation server determines a hindsight route for traveling from the starting location to the destination location in the shortest amount of time starting at the time in which the user requested the navigation directions. More specifically, the hindsight route is determined by calculating the actual amount of time it took for the user to traverse each road segment included in the route according to the positioning data from the user's client device. The performance evaluation server also determines the actual amount of time it took for other users to traverse alternative road segments that were not included in the route. The performance evaluation server then identifies the hindsight route as a combination of the road segments on the actual route and the alternative road segments, where the combination results in a route having the shortest amount of time to the destination location.

The performance evaluation server then generates a performance metric for the route based on the difference between the actual route and the hindsight route. The performance metric may include the percentage of road segments from the actual route which were included in the hindsight route or the percentage of the total distance of the hindsight route which was included in the actual route. The performance metric may also include the difference in the predicted amount of time for traversing the route and the actual amount of time for traversing the route, the difference in the actual amount of time for traversing the route and the amount of time it would have taken to traverse the hindsight route, and the difference in the predicted amount of time for traversing the route and the amount of time it would have taken to traverse the hindsight route. An overall performance metric for the navigation application may also be generated based on the performance metrics for each of the routes.

Then the performance evaluation server may provide the performance metrics for each of the routes or the overall performance metric for display on a user interface. For example, the display may indicate that the navigation application identifies the fastest route 95% of the time. The performance metrics may also be used to identify errors in the route determination algorithm and perform a root-cause analysis to determine the cause of the errors. Furthermore, the performance metrics may be used to adjust the route determination model that is used to generate routes from starting location to destination locations. For example, the route determination model may include a combination of several parameters for determining whether to include a particular road segment on the route. Each parameter may be weighted and the performance evaluation server may adjust the weights for the parameters based on the performance metrics.

In particular, an example embodiment of the techniques of the present disclosure is a method for evaluating performance of a navigation application that identifies optimal routes to destination locations. For each of a plurality of routes generated by a navigation application to a plurality of destination locations, the method includes receiving an indication of the route generated by the navigation application in response to a request by a user for navigation directions from a starting location to a destination location including a plurality of road segments, determining a hindsight route for traveling from the starting location to the destination location in a shortest amount of time at a time in which the user requested the navigation directions based on actual amounts of time for traversing the plurality of road segments and for traversing alternative road segments, where the hindsight route is determined after the user arrived at the destination location, and comparing the route to the hindsight route to determine a performance metric for the route. The method further includes providing an overall performance metric for the navigation application based on the performance metrics for each of the plurality of routes.

Another embodiment of these techniques is a server device for evaluating performance of a navigation application that identifies optimal routes to destination locations. The server device includes one or more processors and a non-transitory computer-readable memory storing instructions thereon. When executed by the one or more processors, the instructions cause the server device to for each of a plurality of routes generated by a navigation application to a plurality of destination locations, receive an indication of the route generated by the navigation application in response to a request by a user for navigation directions from a starting location to a destination location including a plurality of road segments. The instructions further cause the server device to determine a hindsight route for traveling from the starting location to the destination location in a shortest amount of time at a time in which the user requested the navigation directions based on actual amounts of time for traversing the plurality of road segments and for traversing alternative road segments, where the hindsight route is determined after the user arrived at the destination location, and compare the route to the hindsight route to determine a performance metric for the route. Furthermore, the instructions cause the server device to provide an overall performance metric for the navigation application based on the performance metrics for each of the plurality of routes.

Yet another embodiment of these techniques is a non-transitory computer-readable medium storing instructions thereon. When executed by the one or more processors, the instructions cause the one or more processors to for each of a plurality of routes generated by a navigation application to a plurality of destination locations, receive an indication of the route generated by the navigation application in response to a request by a user for navigation directions from a starting location to a destination location including a plurality of road segments. The instructions further cause the one or more processors to determine a hindsight route for traveling from the starting location to the destination location in a shortest amount of time at a time in which the user requested the navigation directions based on actual amounts of time for traversing the plurality of road segments and for traversing alternative road segments, where the hindsight route is determined after the user arrived at the destination location, and compare the route to the hindsight route to determine a performance metric for the route. Furthermore, the instructions cause the one or more processors to provide an overall performance metric for the navigation application based on the performance metrics for each of the plurality of routes.

### BRIEF DESCRIPTION OF THE DRAWINGS

Fig. 1 illustrates a block diagram of an example communication system in which techniques for evaluating the performance of a navigation application can be implemented;
Fig. 2A is an example navigation display including a route from a starting location to a destination location generated by a navigation application;
Fig. 2B is an example display of hindsight navigation data for generating a hindsight route to the same destination location as in Fig. 2A after the user has arrived at the destination location;
Fig. 3A is an example map display including road segments and respective weights assigned to each road segment for generating a hindsight route to a destination based on the path having the lowest aggregate weight;
Fig. 3B is an example graph for generating a hindsight route using a least-cost path analysis; and
Fig. 4 is a flow diagram of an example method for evaluating the performance of a navigation application, which can be implemented by a performance evaluation server.

### DETAILED DESCRIPTION

Generally speaking, the techniques for evaluating performance of a navigation application can be implemented in one or several client computing devices, one or several network servers or a system that includes a combination of these devices. However, for clarity, the examples below focus primarily on an embodiment in which a navigation application executes on a client computing device and presents navigation directions from a starting location to a destination location via a route determined by a navigation data server. The navigation application may also present an estimate of the amount of time to reach the destination location. After arriving at the destination location and when a user agrees to share location and other sensor data, the navigation application may provide, to a performance evaluation server, an indication of the generated route, the estimated amount of time to reach the destination location, an indication of the date and time or time period in which the user requested navigation directions to the destination location, and/or indications of the actual amount of time it took to reach the destination or to traverse various road segments along the route (also referred to herein as "traversal times"). The performance evaluation server may receive similar route information for several routes presented by the navigation application on several users' client computing devices.

Additionally, the performance evaluation server may obtain positioning data and other sensor data from client computing devices of users who were traveling within the same geographic area as the user in the same time frame as the user.

The performance evaluation server may then generate a hindsight route for traveling from the starting location to the destination location in the shortest amount of time starting at the time in which the user requested the navigation directions. The hindsight route may be generated based on the actual amounts of time it took the user to traverse various road segments along the route and actual amounts of time it took other users to traverse various road segments within the geographic area. Moreover, the hindsight route may include a combination of road segments traversed by the user and road segments traversed by other users.

The performance evaluation server may then compare the hindsight route to the route generated by the navigation application to generate a performance metric for the route. The performance evaluation server may provide the performance metric for the route along with an indication of the hindsight route and the route generated by the navigation application to a client computing device. In this manner, the client computing device may present the performance metric and indications of the hindsight route and/or the route generated by the navigation application to users reviewing the performance of the navigation application. The performance evaluation server may also generate an overall performance metric for the navigation application based on performance metrics for several routes generated by the navigation application on various users' client computing devices. The client computing device may present the overall performance metric for the navigation application for example, to customers or partners licensing the navigation software and services. The overall performance metric for the navigation application and/or individual performance metrics for various routes or road segments may also be presented to employees or other members of the organization that created the navigation application to determine the quality of the routes generated by the navigation application. Members of the organization may also view the performance metrics to find defects in the route determination methods, and/or perform a root-cause analysis on these defects.

### Example hardware and software components

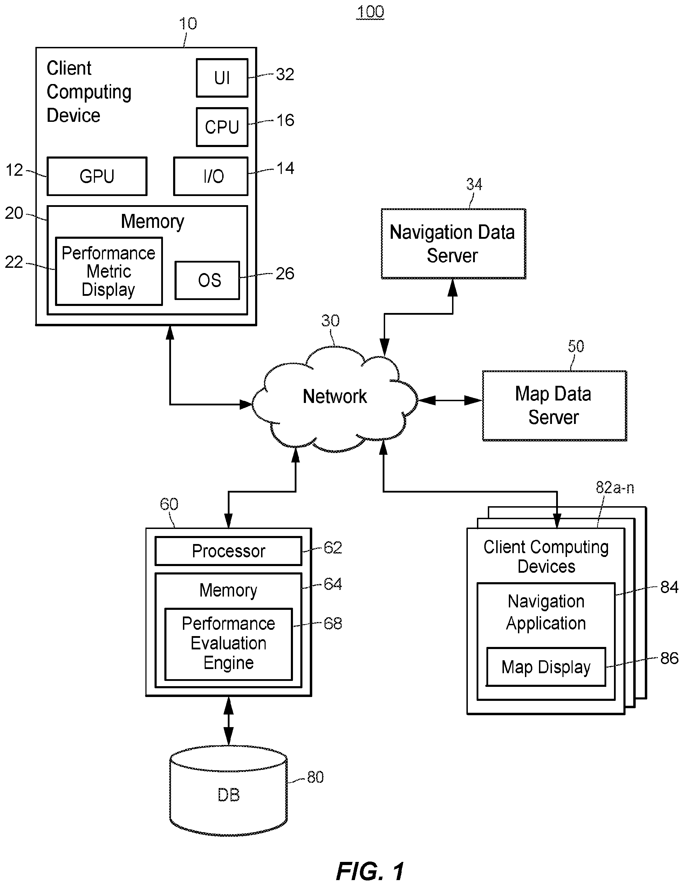

Referring to Fig. 1, an example communication system 100 in which a navigation performance evaluation system can be implemented includes a client computing device 10 (also referred to herein as a "client device") and several other client devices 82a-n, such as a computing device configured to execute a geographic application 84, which also can be referred to as "navigation application 84." Depending on the implementation, the application 84 can display an interactive digital map, request and receive routing data to provide driving, walking, or other navigation directions, provide various geolocated content, etc. Each of the client devices 82a-n may be operated by users displaying digital maps while navigating to various locations.

In addition to the client device 10 and the other client devices 82a-n, the communication system 100 includes a performance evaluation server 60 configured to provide an overall performance metric for the navigation application and/or individual performance metrics for routes or road segments to the client device 10. The performance evaluation server 60 can be communicatively coupled to a database 80 that stores, in an example implementation, route information for routes previously generated by the navigation application 84, and hindsight routes indicating the historically fastest routes for travelling from a starting location to a destination location on a particular day, time of day, etc.

More generally, the performance evaluation server 60 can communicate with one or several databases that store any type of suitable geospatial information or information. The communication system 100 also can include a navigation data server 34 that provides driving, walking, biking, or public transit directions, for example for presentation via the navigation application 84. Further, the communication system 100 can include a map data server 50 that provides map data to the client devices 82a-n for generating the map display 86. The devices operating in the communication system 100 can be interconnected via a communication network 30.

The client device 10 may be a portable device such as smart phone or a tablet computer, for example. The client device 10 may also be a laptop computer, a desktop computer, a personal digital assistant (PDA), a wearable device such as a smart watch or smart glasses, etc. The client device 10 also can communicate with various content providers, servers, etc. via a wired or wireless communication network 30 such as a fourth- or third-generation cellular network (4G or 3G, respectively). The client device 10 may include a memory 20, one or more processors (CPUs) 16, a graphics processing unit (GPU) 12, an I/O module 14, and a user interface (UI) 32. The memory 20 can be a non-transitory memory and can include one or several suitable memory modules, such as random access memory (RAM), read-only memory (ROM), flash memory, other types of persistent memory, etc. The I/O module 14 may be a touch screen, for example. In various implementations, the client device 10 can include fewer components than illustrated in Fig. 1 or conversely, additional components.

The memory 20 stores an operating system (OS) 26, which can be any type of suitable mobile or general-purpose operating system. The memory 20 also stores a performance metric display 22, which is configured to receive an overall performance metric for a navigation application, individual performance metrics for routes or road segments generated by the navigation application, and/or other navigation performance data related to the navigation application, such as indications of routes generated by the navigation application and corresponding hindsight routes. The performance metric display 22 is configured to present the navigation performance data on the user interface 32.

As mentioned above, each client device 82a-n may be operated by a user displaying map data. Each of the client devices 82a-n may be a smartphone or a tablet computer and may have one or several sensors. Additionally, each client device 82a-n may include a memory that stores an operating system (OS) and a navigation application 84 which is configured to generate interactive digital maps and/or perform other geographic functions, as indicated above. The navigation application 84 can receive map data in a raster (e.g., bitmap) or non-raster (e.g., vector graphics) format from the map data server 50 and present the map data via a map display 86. In some cases, the map data can be organized into layers, such as a basic layer depicting roads, streets, natural formations, etc., a traffic layer depicting current traffic conditions, a weather layer depicting current weather conditions, a navigation layer depicting a path to reach a destination, etc. The navigation application 84 also can display driving, walking, or transit directions, and in general provide functions related to geography, geolocation, navigation, etc. via the map display 86.

It is noted that although Fig. 1 illustrates the navigation application 84 as a standalone application, the functionality of the navigation application 84 also can be provided in the form of an online service accessible via a web browser executing on the client device 82a-n, as a plug-in or extension for another software application executing on the client device 82a-n, etc. The navigation application 84 generally can be provided in different versions for different respective operating systems. For example, the maker of the client device 82a-n can provide a Software Development Kit (SDK) including the navigation application 84 for the Android™ platform, another SDK for the iOS™ platform, etc.

In some implementations, the performance evaluation server 60 includes one or more processors 62 and a memory 64. The memory 64 may be tangible, non-transitory memory and may include any types of suitable memory modules, including random access memory (RAM), read-only memory (ROM), flash memory, other types of persistent memory, etc. The memory 64 stores instructions executable on the processors 62 that make up a performance evaluation engine 68, which can generate an overall performance metric for a navigation application, individual performance metrics for routes or road segments generated by the navigation application, or regional performance metrics for routes generated by the navigation application in a particular geopolitical region, such as a city, state, or country. The performance evaluation engine 68 may also provide the navigation performance data that is displayed by the performance metric display 22 of the client device 10.

The performance evaluation engine 68 and the performance metric display 22 can operate as components of a navigation performance evaluation system. Alternatively, the navigation performance evaluation system can include only server-side components and simply provide the performance metric display 22 with instructions to display navigation performance data. In other words, navigation performance evaluation techniques in these embodiments can be implemented transparently to the performance metric display 22. As another alternative, the entire functionality of the performance evaluation engine 68 can be implemented in the performance metric display 22.

For simplicity, Fig. 1 illustrates the performance evaluation server 60 as only one instance of a server. However, the performance evaluation server 60 according to some implementations includes a group of one or more server devices, each equipped with one or more processors and capable of operating independently of the other server devices. Server devices operating in such a group can process requests from the client device 10 individually (e.g., based on availability), in a distributed manner where one operation associated with processing a request is performed on one server device while another operation associated with processing the same request is performed on another server device, or according to any other suitable technique. For the purposes of this discussion, the term "server device" may refer to an individual server device or to a group of two or more server devices.

In operation, the performance metric display 22 operating in the client device 10 receives and transmits data to the performance evaluation server 60. Thus, in one example, the client device 10 may transmit a communication to the performance evaluation engine 68 (implemented in the performance evaluation server 60) requesting navigation performance data. The request may be for a particular starting location/destination location pair, may be for all routes starting from a particular starting location or all routes arriving at a particular destination location, may be for a particular geographic region (e.g., for navigation performance data for routes generated by the navigation application across the United States, in California, in Seattle, etc.), or may be worldwide.

Accordingly, the performance evaluation engine 68 may obtain route information from the client devices 82a-n for routes generated within the specified geographic region. The route information may include a starting location and a destination location for a route, indications of each of the road segments and/or maneuvers included in the route, a date and/or time in which the navigation directions were requested, a predicted amount of time for reaching the destination when travelling on the route, etc. The performance evaluation engine 68 may also obtain positioning data and/or other sensor data from client devices 82a-n traveling within the geographic region which are executing the navigation application 84. The positioning data and/or other sensor data may include positioning data and/or other sensor data for the user that requested the navigation directions corresponding to the route.

Accordingly, the performance evaluation engine 68 may analyze the positioning data and/or other sensor data to determine the actual traversal time for the user to complete the route from the starting location to the destination location, actual traversal times for the user to traverse each road segment on the route, the speeds at which the user travelled on various road segments or an average speed for each road segment, etc. The positioning data and/or other sensor data may include positioning data and/or other sensor data for other users of other client devices 82a-n that did not request the navigation directions corresponding to the route. The positioning data and/or other sensor data may be from the same time period as the time period in which the user requested navigation directions corresponding to the route. For example, when a user requests navigation directions corresponding to a route at 3 p.m. on August 21, 2018, the performance evaluation engine 68 may obtain positioning data and/or other sensor data from other client devices 82a-n between 2:30 p.m. and 3:30 p.m. on August 21,2018.

In this manner, the performance evaluation engine 68 may analyze the positioning data and/or other sensor data to determine the traversal times for alternative road segments which were not on the route, the speeds at which the other users travelled on the alternative road segments or an average speed for each alternative road segment, etc. The performance evaluation engine 68 may then generate a hindsight route which indicates, after the route has been completed, the actual fastest route from the starting location to the destination location based on the actual traversal times and speeds for various road segments at the date and time in which the user requested navigation directions corresponding to the route.

The performance evaluation engine 68 may generate the hindsight route by assigning traversal times to road segments in a geographic area that includes the starting location and destination location, and identifying a combination of road segments for travelling from the starting location to the destination location in the shortest amount of time. For example, the navigation application 84 may have presented navigation directions from location A to location Z at 3 p.m. on August 21, 2018 which included traveling from location A to location B to location C to location Z, and it may have taken the user 20 minutes to travel from location A to location Z with this route. However, with the benefit of hindsight the performance evaluation engine 68 may determine that it would have been faster to travel from location A to location D to location C to location Z since it took users traveling between 2:30 p.m. and 3:30 p.m. on August 21, 2018 an average of a total of 12 minutes to travel from location A to location D and to travel from location D to location C while it took the user 15 minutes to travel from location A to location B to location C.

The performance evaluation engine 68 may then compare the hindsight route to the route generated by the navigation application to determine a performance metric for the route. The performance metric may include the percentage of road segments from the actual route which were included in the hindsight route or the percentage of the total distance of the hindsight route which was included in the actual route. The performance metric may also include the difference in the predicted amount of time for traversing the route and the actual amount of time for traversing the route, the difference in the actual amount of time for traversing the route and the amount of time it would have taken to traverse the hindsight route, and the difference in the predicted amount of time for traversing the route and the amount of time it would have taken to traverse the hindsight route.

Additionally, the performance evaluation engine 68 may generate hindsight routes and determine performance metrics for several routes within a specified geographic region. In some implementations, the performance evaluation engine 68 may generate an overall performance metric for the navigation application and/or for the specified geographic region based on the individual performance metrics for the routes or road segments. For example, the overall performance metric may be an average of the individual performance metrics, a weighted average of the individual performance metrics such as a moving average or a time decaying average, a sum total of the individual performance metrics, or any suitable combination of the individual performance metrics.

In any event, the performance evaluation engine 68 may provide the overall performance metric and/or individual performance metrics for display on the client device 10. The performance metric display 22 may then present the overall performance metric and/or individual performance metrics on the user interface 32 of the client device 10. In this manner, customers or partners licensing the navigation software and services may view the navigation performance data. Furthermore, employees or other members of the organization that created the navigation application may view the navigation performance data to determine the quality of the routes generated by the navigation application, to find defects in the route determination methods, to perform a root-cause analysis on these defects, etc.

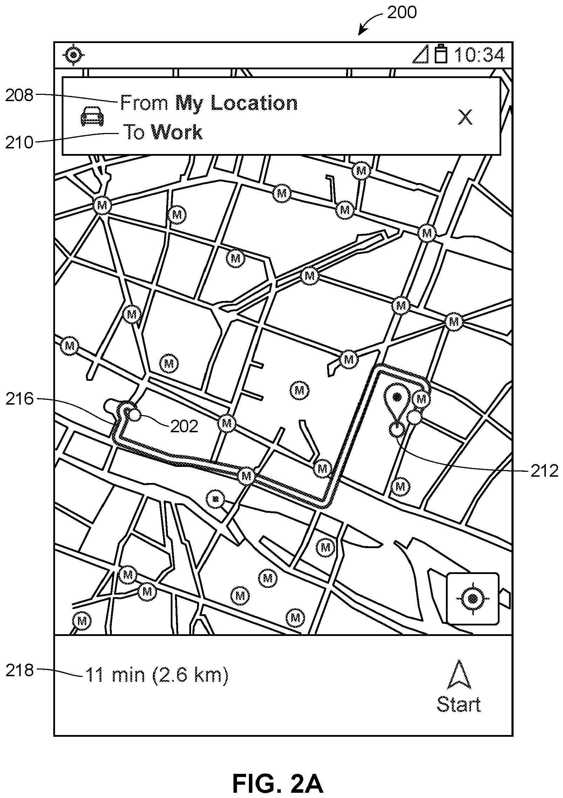

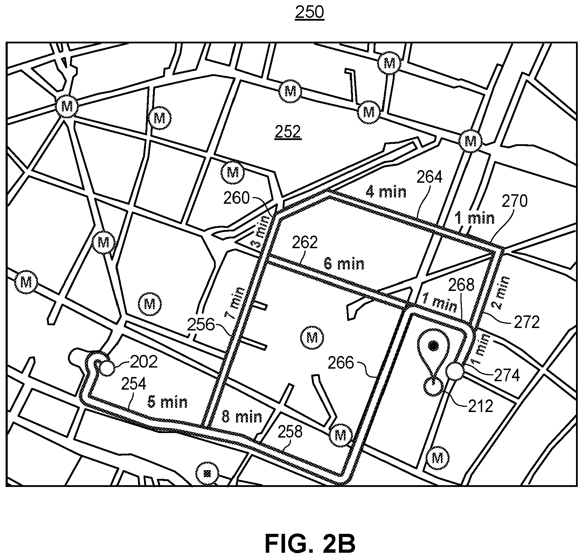

Fig. 2A illustrates an example route presented by a navigation application 84 on a user's client device 82a-n from a user's current location to the user's place of business. Fig. 2B illustrates example candidate hindsight routes for determining, in hindsight, the fastest route from the user's current location to the user's place of business based on actual time intervals for traversing road segments in a geographic area that includes the starting location and the destination location. More specifically, the navigation display 200 of Fig. 2A includes an example route 216 from a user's current location 202 to the user's place of business 212. The route 216 includes several road segments (e.g., from the corner of Main Street and State Street to the corner of Main street and Green Street) and maneuvers (e.g., left and right turns). The navigation display 200 also includes a predicted amount of time for traversing the route 218. The route 216 may be generated at 10:34 a.m. on July 25, 2018 by the navigation data server 34, for example. In some implementations, the navigation data server 34 generates the route 216 using route determination methods including applying the starting location (the user's current location) and the destination location (the user's place of business) to a route determination model. The route determination model may include several parameters and/or weights assigned to each parameter and may be generated based on historical navigation data. For example, the route determination model may be generated using machine learning techniques based on training data from vehicles previously traversing road segments at various times of day, weather conditions, traffic conditions, times of the year, etc. Accordingly, the navigation data server 34 may generate the route 216 and predict the amount of time for traversing the route 218 using near-future predictions based on historical data from the route determination model.

After the user has arrived at her place of business 212, the client device 82a-n may provide an indication of the route 216 and the predicted amount of time for traversing the route 218 to the performance evaluation server 60. The client device 82a-n may also provide positioning data and/or other sensor data for the client device 82a-n along the route. This may include indications of the positions of the client device 82a-n at various times along the route, including a time in which the client device 82a-n left the starting location and a time in which the client device 82a-n arrived at the destination location. In this manner, the performance evaluation engine 68 may determine the actual traversal time for the route. Furthermore, the performance evaluation engine 68 may determine actual traversal times for each road segment on the route and/or average speeds for traversing each road segment on the route. In some instances, the performance evaluation engine 68 may determine that the client device 82a-n did not move for more than a threshold amount of time (e.g., 5 minutes). Accordingly, the performance evaluation engine 68 may determine that the user took a break from the route (e.g., to stop for gas or a drive thru) and may subtract this time period from the total traversal time for the route.

In any event, the performance evaluation engine 68 may also obtain positioning and/or other sensor data from other client devices 82a-n traveling within the same geographic area as the user within the same time frame as the user. For example, the geographic area may be an *n* mile by *n* mile area that includes both the starting location and the destination location, where *n* is in proportion to the distance between the starting location and the destination location (e.g., *n* may be equal to the distance between the starting location and the destination location, twice the distance between the starting location and the destination location, etc.). The time frame may be a one hour interval, two hour interval, etc., that includes the time in which the user requested navigation directions.

The performance evaluation engine 68 may then generate actual traversal times for road segments in the geographic area at the time in which the user requested navigation directions using the positioning data and/or other sensor data from the client device 82a-n that requested navigation directions corresponding to the route 216 and from the other client devices 82a-n traveling within the same geographic area within the same time frame. The performance evaluation engine 68 may determine an actual traversal time for a particular road segment based on the differences between the times in which vehicles entered a road segment and exited a road segment. When the performance evaluation engine 68 receives sensor data from several client devices 82a-n for the same road segment, the performance evaluation engine 68 may determine the actual traversal time for the road segment as the average of the actual traversal times indicated by each client device 82a-n. The performance evaluation engine 68 may also determine the actual traversal time for the road segment as a weighted average of the actual traversal times for example, where client devices 82a-n traveling on the road segment closer in time to the time in which the user requested navigation directions are weighted higher. Furthermore, the performance evaluation engine 68 may determine the actual traversal time for the road segment based on any other suitable combination of the traversal times indicated by each client device 82a-n. In other implementations, the performance evaluation engine 68 may determine an actual traversal time for a particular road segment based on an average speed in which vehicles traveled on the road segment and the length of the road segment.

Fig. 2B illustrates a display 250 of hindsight navigation data within a geographic area 252 for identifying candidate hindsight routes from the starting location 202 to the destination location 212. The hindsight navigation data includes actual traversal times determined by the performance evaluation engine 68 for road segments on the route 216 (e.g., road segment 254) and for alternative road segments in the geographic area which were not on the route 216 (e.g., alternative road segment 256). While the display 250 includes actual traversal times for a subset of the road segments included in the geographic area 252, this is for ease of illustration only. The performance evaluation engine 68 may determine actual traversal times for each of the road segments in the geographic area 252. In any event, the performance evaluation engine 68 may identify candidate hindsight routes from the starting location 202 to the destination location 212 using a pathfinding algorithm, where each road segment is assigned a weight corresponding to the actual traversal time for the road segment.

For example, beginning at the starting location 202 each of the road segments 254-274 are included in a set of candidate road segments. The performance evaluation engine 68 may identify a road segment having the lowest weight which is connected to the starting location 202 and remove the identified road segment from the set. In this example, the only road segment connected to the segment location 202 is road segment 254 which has a weight of 5, so the performance evaluation engine 68 identifies road segment 254 and removes road segment 254 from the set. Next, the performance evaluation engine 68 identifies a road segment remaining in the set having the lowest weight which is connected to the road segment 254 and removes the identified road segment from the set. This process is repeated until the destination location is reached. In this example, the road segments remaining in the set which are connected to road segment 254 are road segments 256 and 258. Road segment 256 has a lower weight of 7 and is therefore identified and removed from the set. The road segments remaining in the set which are connected to road segment 256 are road segments 260 and 262. Road segment 260 has a lower weight of 3 and is therefore identified and removed from the set. Road segments 264, 270, 272, and 274 are also identified for the candidate hindsight route. Accordingly, the sum total weight or the total traversal time for the candidate hindsight route is 23 min.

This process is then repeated for road segments which were not selected in the first iteration (e.g., road segments 258, 262, 266, 268). In a second iteration, the performance evaluation engine 68 identifies a second candidate hindsight route including road segments 254, 258, 266, 268, and 274 having a sum total weight or total traversal time for the second candidate hindsight route of 19 min. In a third iteration, the performance evaluation engine 68 identifies a third candidate hindsight route including road segments 254, 256, 262, 268, and 274 having a sum total weight or total traversal time for the third candidate hindsight route of 20 min. After the third iteration, the performance evaluation engine 68 has selected each of the road segments 254-274 and the process is completed. The performance evaluation engine 68 then compares the three candidate hindsight routes and determines that the second candidate hindsight route has the fastest time to the destination location of 19 min. Accordingly, the performance evaluation engine 68 selects the second candidate hindsight route as the hindsight route.

In other implementations, the performance evaluation engine 68 identifies candidate hindsight routes by assigning additional weights to each road segment which estimate the amount of time from the road segment to the destination location. The additional weights may be determined using a heuristic function. For example, the estimate corresponding to an additional weight may be based on the physical distance from the road segment to the destination location. Road segments which are closer to the destination location may be assigned lower additional weights than road segments further from the destination location. For example, road segment 256 may have a weight of 7 while road segment 258 has a weight of 8. However, road segment 256 may have a higher additional weight than road segment 258 since road segment 258 is closer to the destination location. The performance evaluation engine 68 may identify a road segment having the lowest combination of the weight and the additional weight which is connected to the starting location 202. Then the performance evaluation engine 68 may identify a road segment having the lowest combination of the weight and the additional weight which is connected to the identified road segment, and may repeat this process until the destination location is reached. In this manner, the first candidate hindsight route identified by the performance evaluation engine 68 may be the hindsight route having the fastest time to the destination location, and the performance evaluation engine 68 may not have to iterate over road segments which were not identified in the first iteration.

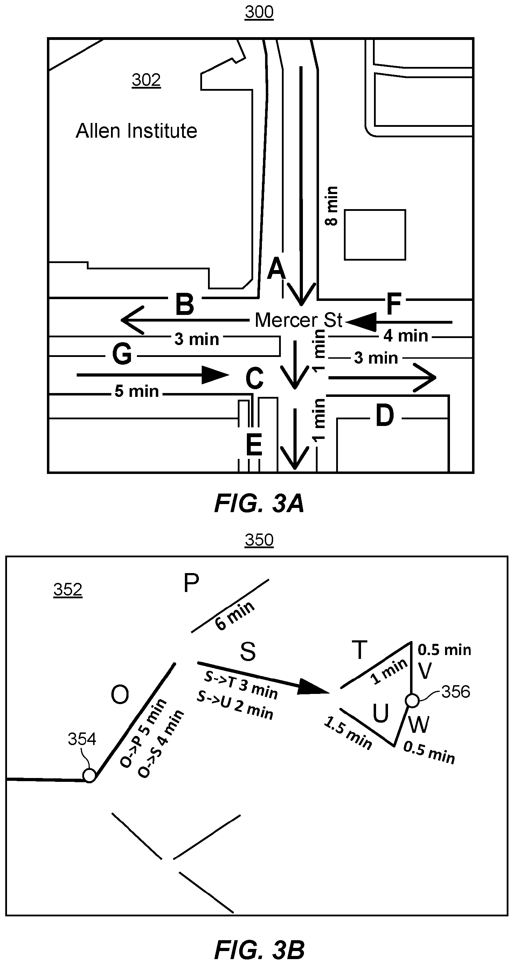

Figs. 3A and 3B illustrate additional example displays of hindsight navigation data within geographic areas 300, 350 for identifying candidate hindsight routes from a starting location to a destination location. Fig. 3A includes a display 300 of a geographic area 302 having road segments A, B, C, D, E, F, and G. Road segment A has a weight of 8, road segment B has a weight of 3, road segment C has a weight of 1, road segment D has a weight of 3, road segment E has a weight of 1, road segment F has a weight of 4, and road segment G has a weight of 5. Using the weights, the performance evaluation engine 68 may determine a hindsight route for traveling from starting locations to destination locations within the geographic area 302.

Fig. 3B includes another example display 350 of a geographic area 352 having road segments O, P, S, T, U, V, and W. Road segment P has a weight of 6, road segment T has a weight of 1, road segment U has a weight of 1.5, and road segment V and W have weights of 0.5. In some implementations, the performance evaluation engine 68 may determine different traversal times for the same road segment depending on the maneuver from the road segment to the next road segment, the maneuver from the previous road segment to the road segment, or any suitable combination of these. For example, a road segment may be a highway exit where several vehicles turn left while very few vehicles turn right. Accordingly, the traversal time for the road segment may be higher when making a left turn from the road segment to the next road segment than when making a right turn. In another example, it may be very difficult to make a left turn from a road segment onto another road segment, such that it may take an average of an additional 3 minutes from the time the vehicle reaches the intersection until the left turn is made. Accordingly, the traversal time for the road segment may be higher when making a left turn from the road segment to the next road segment than when continuing straight onto the next road segment. As a result, the performance evaluation engine 68 may identify several traversal times for the same road segment depending on the maneuver from the road segment to the next road segment, the maneuver from the previous road segment to the road segment, or any suitable combination of these. A traversal time for the road segment depending on the maneuver from the road segment to the next road segment may be based on traversal times for vehicles traveling on the road segment and making a particular maneuver onto the next road segment within the same time frame as the route was generated.

In the example display 350, road segment O has two weights including a first weight of 5 when traveling on road segment O and continuing straight onto road segment P, and a second weight of 4 when traveling on road segment O and turning right onto road segment S. Road segment S also has two weights including a first weight of 3 when traveling on road segment S and turning left onto road segment T, and a second weight of 2 when traveling on road segment S and turning right onto road segment U. When determining a hindsight route from starting location 354 to destination location 356, the performance evaluation engine 68 may identify road segments O and S. Then the performance evaluation engine 68 may determine that the combined weights including road segment T for road segments S and T is 4 while the combined weights including road segment U for road segments S and U is 3.5. Therefore, the performance evaluation engine 68 selects the hindsight route as including road segments O, S, U and W even though road segment T has a lower weight than road segment U because the weight for road segment S is higher when turning left onto road segment T than when turning right onto road segment U.

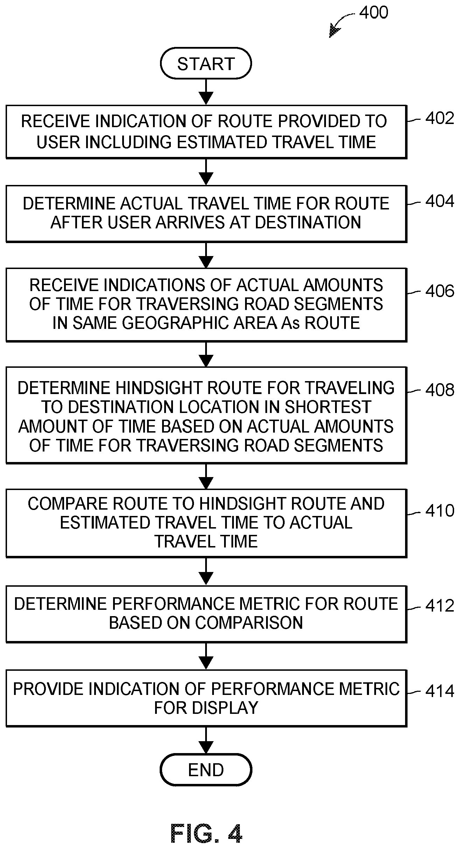

Fig. 4 illustrates an example method 400 for evaluating performance of a navigation application that identifies optimal routes to destination locations, which can be implemented at a network server (such as the performance evaluation server 60), for example. The method can be implemented in a set of instructions stored on a computer-readable memory and executable at one or more processors of the performance evaluation server 60. For example, the method can be implemented by the performance evaluation engine 68.

At block 402, an indication of a route from a starting location to a destination location is received, for example from a client device 82a-n of a user that requested navigation directions corresponding to the route. The indication of the route may be provided to the performance evaluation server 60 after the route has been completed. Furthermore, the indication of the route may include a predicted amount of time for traversing the route, the starting location for the route, the destination location for the route, road segments and maneuvers on the route, predicted amounts of time for traversing each road segment, etc.

Then at block 404, the performance evaluation server 60 determines an actual traversal time for the route. More specifically, the client device 82a-n may provide positioning data and/or other sensor data to the performance evaluation server 60 while traveling on the route. This may include the start time for the route, the time at which the user arrived at the destination location, and/or times corresponding to various locations for the user along the route.

The performance evaluation server 60 also receives positioning data and/or other sensor data from client devices 82a-n travelling within the same geographic area as the route and within the same time frame as the route. For example, the geographic area may be an *n* mile by *n* mile area that includes both the starting location and the destination location, where *n* is in proportion to the distance between the starting location and the destination location (e.g., *n* may be equal to the distance between the starting location and the destination location, twice the distance between the starting location and the destination location, etc.). The time frame may be a one hour interval, two hour interval, etc., that includes the time in which the user requested navigation directions.

The performance evaluation engine 68 may then generate actual traversal times for road segments in the geographic area at the time in which the user requested navigation directions using the positioning data and/or other sensor data from the client device 82a-n that requested navigation directions corresponding to the route and from the other client devices 82a-n traveling within the same geographic area within the same time frame (block 406). The performance evaluation engine 68 may determine an actual traversal time for a particular road segment based on the differences between the times in which vehicles entered a road segment and exited a road segment. In other implementations, the performance evaluation engine 68 may determine an actual traversal time for a particular road segment based on an average speed in which vehicles traveled on the road segment and the length of the road segment.

Then the performance evaluation engine 68 determines a hindsight route for traveling from the starting location to the destination location in the shortest amount of time at the time the user requested navigation directions based on the traversal times for road segments in the geographic area (block 408). More specifically, the performance evaluation engine 68 may identify candidate hindsight routes from the starting location to the destination location using a pathfinding algorithm, where each road segment is assigned a weight corresponding to the actual traversal time for the road segment. In some implementations, the performance evaluation engine 68 may identify each combination of road segments from the starting location to the destination location as a candidate hindsight route. Each candidate hindsight route may be assigned the sum total of the weights for the road segments on the candidate hindsight route as a score for the candidate hindsight route. Then the performance evaluation engine 68 may select the candidate hindsight route having the lowest score as the hindsight route.

In other implementations, each road segment is assigned a first weight corresponding to the actual traversal time for the road segment, and a second weight corresponding to an estimate of the amount of time from the road segment to the destination location. The performance evaluation engine 68 may then identify a road segment having the lowest combination of first and second weights which is connected to the starting location. Then the performance evaluation engine 68 may identify a road segment having the lowest combination of first and second weights which is connected to the identified road segment, and may repeat this process until the destination location is reached. In this manner, the performance evaluation engine 68 may select the first hindsight route from the starting location to the destination location as the hindsight route and may not identify several candidate hindsight routes.

In any event, at block 410, the performance evaluation engine 68 compares the hindsight route to the route generated by the navigation application executing on the client device 82a-n. The performance evaluation engine 68 may also compare the predicted amount of time for traversing the route to the actual amount of time for traversing the route and/or the amount of time for traversing the hindsight route.

Accordingly, the performance evaluation engine 68 may generate a performance metric for the route based on the comparison of the hindsight route to the route generated by the navigation application and/or based on the comparison of predicted amount of time for traversing the route to the actual amount of time for traversing the route and/or the amount of time for traversing the hindsight route (block 412). The performance metric may include the percentage of road segments from the actual route which were included in the hindsight route or the percentage of the total distance of the hindsight route which was included in the actual route. The performance metric may also include the difference in the predicted amount of time for traversing the route and the actual amount of time for traversing the route, the difference in the actual amount of time for traversing the route and the amount of time it would have taken to traverse the hindsight route, and the difference in the predicted amount of time for traversing the route and the amount of time it would have taken to traverse the hindsight route.

More specifically, the performance evaluation engine 68 may generate the performance metric based on one or more of the following factors: (i) the number or percentage of road segments from the actual route which were included in the hindsight route, (ii) the number or percentage of alternative road segments which were included in the hindsight route, (iii) the difference in the predicted amount of time for traversing the route and the actual amount of time for traversing the route, (iv) the difference in the actual amount of time for traversing the route and the amount of time it would have taken to traverse the hindsight route, (v) the difference in the predicted amount of time for traversing the route and the amount of time it would have taken to traverse the hindsight route, and (vi) the percentage of the total distance of the hindsight route which was included in the actual route. The performance evaluation engine 68 may generate several performance metrics for the route according to each factor, or the performance evaluation engine 68 may generate the performance metric based on any suitable combination of these factors. For example, the performance evaluation engine 68 may assign a score for each factor and may aggregate or combine the factor-specific scores in any suitable manner to generate a total score which may be used as the performance metric. The total score may be an average or the factor-specific scores, a weighted average of the factor-specific scores where each factor is assigned a different weight, a sum of the factor-specific scores, etc.

Furthermore, the performance evaluation engine 68 may generate hindsight routes and determine performance metrics for several routes within a specified geographic region (e.g., a city, a state, a country, etc.). Then the performance evaluation engine 68 may generate an overall performance metric for the navigation application and/or for the specific geographic region based on the individual performance metrics for the routes or road segments on the routes. For example, the overall performance metric may be an average of the individual performance metrics, a weighted average of the individual performance metrics such as a moving average or a time decaying average, a sum total of the individual performance metrics, or any suitable combination of the individual performance metrics.

Moreover, the performance evaluation engine 68 may provide the overall performance metric and/or individual performance metrics for display on the client device 10 (block 414). The performance metric display 22 may then present the overall performance metric and/or individual performance metrics on the user interface 32 of the client device 10. In this manner, customers or partners licensing the navigation software and services may view the navigation performance data. Furthermore, employees or other members of the organization that created the navigation application may view the navigation performance data to determine the quality of the routes generated by the navigation application, to find defects in the route determination methods, to perform a root-cause analysis on these defects, etc.

In some implementations, the client device 10, the performance evaluation server 60, and/or the navigation data server 34 may identify errors in the route determination methods used by the navigation data server 34 based on the performance metrics and/or hindsight routes. For example, when an individual performance metric for a road segment is below a threshold value, the performance evaluation server 60 may analyze the route to identify discrepancies between the routes generated by the navigation application and the hindsight routes. For example, the performance evaluation server 60 may identify a longer actual traversal time for the road segment than the predicted traversal time for the road segment according to the route determination methods in several instances, such as at several times of day, for different weather and traffic conditions, etc., thereby identifying an error in the route determination methods. Accordingly, the performance evaluation server 60 and/or the navigation data server 34 may perform corrective actions, such as adjusting the route determination methods such that the road segment is assigned a longer predicted traversal time.

The performance evaluation server 60 may also perform a root-cause analysis by analyzing the discrepancies between the routes generated by the navigation application and the hindsight routes. For example, the performance evaluation server 60 may determine that a road segment has a longer actual traversal time than the predicted traversal time due to a difficult left turn from the road segment onto the next segment, where a large percentage of the routes generated include the difficult left turn. Therefore, the performance evaluation server 60 may determine that the cause of the discrepancy is due to the difficult left turn. In some instances, the performance evaluation server 60 may provide the results of the root-cause analysis to the navigation data server 34 to adjust parameters in a route determination model. For example, the route determination model may include a combination of several parameters for determining whether to include a particular road segment on the route. Each parameter may be weighted and the weights for the parameters may be adjusted based on the performance metrics.

### Additional considerations

The following additional considerations apply to the foregoing discussion. Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter of the present disclosure.

Additionally, certain embodiments are described herein as including logic or a number of components, modules, or mechanisms. Modules may constitute either software modules (e.g., code stored on a machine-readable medium) or hardware modules. A hardware module is tangible unit capable of performing certain operations and may be configured or arranged in a certain manner. In example embodiments, one or more computer systems (e.g., a standalone, client or server computer system) or one or more hardware modules of a computer system (e.g., a processor or a group of processors) may be configured by software (e.g., an application or application portion) as a hardware module that operates to perform certain operations as described herein.

In various embodiments, a hardware module may be implemented mechanically or electronically. For example, a hardware module may comprise dedicated circuitry or logic that is permanently configured (e.g., as a special-purpose processor, such as a field programmable gate array (FPGA) or an application-specific integrated circuit (ASIC)) to perform certain operations. A hardware module may also comprise programmable logic or circuitry (e.g., as encompassed within a general-purpose processor or other programmable processor) that is temporarily configured by software to perform certain operations. It will be appreciated that the decision to implement a hardware module mechanically, in dedicated and permanently configured circuitry, or in temporarily configured circuitry (e.g., configured by software) may be driven by cost and time considerations.

Accordingly, the term hardware should be understood to encompass a tangible entity, be that an entity that is physically constructed, permanently configured (e.g., hardwired), or temporarily configured (e.g., programmed) to operate in a certain manner or to perform certain operations described herein. Considering embodiments in which hardware modules are temporarily configured (e.g., programmed), each of the hardware modules need not be configured or instantiated at any one instance in time. For example, where the hardware modules comprise a general-purpose processor configured using software, the general-purpose processor may be configured as respective different hardware modules at different times. Software may accordingly configure a processor, for example, to constitute a particular hardware module at one instance of time and to constitute a different hardware module at a different instance of time.

Hardware and software modules can provide information to, and receive information from, other hardware and/or software modules. Accordingly, the described hardware modules may be regarded as being communicatively coupled. Where multiple of such hardware or software modules exist contemporaneously, communications may be achieved through signal transmission (e.g., over appropriate circuits and buses) that connect the hardware or software modules. In embodiments in which multiple hardware modules or software are configured or instantiated at different times, communications between such hardware or software modules may be achieved, for example, through the storage and retrieval of information in memory structures to which the multiple hardware or software modules have access. For example, one hardware or software module may perform an operation and store the output of that operation in a memory device to which it is communicatively coupled. A further hardware or software module may then, at a later time, access the memory device to retrieve and process the stored output. Hardware and software modules may also initiate communications with input or output devices, and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions. The modules referred to herein may, in some example embodiments, comprise processor-implemented modules.

Similarly, the methods or routines described herein may be at least partially processor-implemented. For example, at least some of the operations of a method may be performed by one or processors or processor-implemented hardware modules. The performance of certain of the operations may be distributed among the one or more processors, not only residing within a single machine, but deployed across a number of machines. In some example embodiments, the processor or processors may be located in a single location (e.g., within a home environment, an office environment or as a server farm), while in other embodiments the processors may be distributed across a number of locations.

The one or more processors may also operate to support performance of the relevant operations in a "cloud computing" environment or as an SaaS. For example, as indicated above, at least some of the operations may be performed by a group of computers (as examples of machines including processors), these operations being accessible via a network (e.g., the Internet) and via one or more appropriate interfaces (e.g., APIs).

The performance of certain of the operations may be distributed among the one or more processors, not only residing within a single machine, but deployed across a number of machines. In some example embodiments, the one or more processors or processor-implemented modules may be located in a single geographic location (e.g., within a home environment, an office environment, or a server farm). In other example embodiments, the one or more processors or processor-implemented modules may be distributed across a number of geographic locations.

Upon reading this disclosure, those of skill in the art will appreciate still additional alternative structural and functional designs for evaluating the performance of a navigation application through the disclosed principles herein. Thus, while particular embodiments and applications have been illustrated and described, it is to be understood that the disclosed embodiments are not limited to the precise construction and components disclosed herein. Various modifications, changes and variations, which will be apparent to those skilled in the art, may be made in the arrangement, operation and details of the method and apparatus disclosed herein without departing from the scope defined in the appended claims.

## Claims

1. A method for evaluating performance of a navigation application that identifies optimal routes to destination locations (212), the method comprising:
for each of a plurality of routes generated by a navigation application to a plurality of destination locations:
receiving (402), at one or more processors (62), an indication of the route generated by the navigation application in response to a request by a user for navigation directions from a starting location (202) to a destination location including a plurality of road segments (254, 256, 258, 260, 262, 264, 266, 268, 270, 272, 274);
determining (408), by the one or more processors, a hindsight route for traveling from the starting location to the destination location in a shortest amount of time at a time in which the user requested the navigation directions based on actual amounts of time for traversing the plurality of road segments and for traversing alternative road segments, wherein the hindsight route is determined after the user arrived at the destination location;
comparing (410), by the one or more processors, the route to the hindsight route to determine (412) a performance metric for the route; and
providing, by the one or more processors, an overall performance metric for the navigation application based on the performance metrics for each of the plurality of routes.

2. The method of claim 1, further comprising:
receiving, at the one or more processors (62), an indication of a predicted amount of time for traversing the route which was calculated at the time in which the user requested the navigation directions;
receiving (404), at the one or more processors, an indication of an actual amount of time it took to traverse the route which was calculated after the user arrived at the destination location (212); and
comparing (410), by the one or more processors, the predicted amount of time for traversing the route to the actual amount of time it took to traverse the route to determine (412) the performance metric for the route.

3. The method of claim 2, wherein comparing (410) the route to the hindsight route to determine (412) a performance metric for the route includes determining, by the one or more processors (62), the performance metric based on at least one of:
a number of road segments (254, 256, 258, 260, 262, 264, 266, 268, 270, 272, 274) included in both the route and the hindsight route;
a number of alternative road segments included in the hindsight route;
a difference between the predicted amount of time for traversing the route and the actual amount of time it took to traverse the route;
a difference between the actual amount of time it took to traverse the route and an amount of time it would have taken to traverse the hindsight route; or
a difference between the predicted amount of time for traversing the route and the amount of time it would have taken to traverse the hindsight route.

4. The method of claim 1, further comprising:
identifying, by the one or more processors (62), errors in route determination methods performed by the navigation application based on the overall performance metric and discrepancies between the plurality of routes generated by the navigation application and the hindsight routes; and
determining, by the one or more processors, a cause of the errors in the route determination methods to perform corrective actions.

5. The method of claim 4, wherein identifying errors in route determination methods performed by the navigation application includes:
determining the performance metric for the route is below a threshold value;
analyzing the route to identify that a road segment (254, 256, 258, 260, 262, 264, 266, 268, 270, 272, 274) on the route has a longer actual traversal time than a predicted traversal time; and
identifying an error in the predicted traversal time for the road segment.

6. The method of claim 1, further comprising:
adjusting, by the one or more processors (62), a route determination model for identifying routes to destination locations (212) based on the overall performance metric.

7. The method of claim 1, wherein determining a hindsight route includes:
receiving, at the one or more processors (62), positioning data from one or more computing devices at a plurality of instances of time within a same time period as a time period in which a user traversed the route to the destination location (212);
analyzing, by the one or more processors, the positioning data at the plurality of instances of time to determine amounts of time for traversing road segments (254, 256, 258, 260, 262, 264, 266, 268, 270, 272, 274); and
determining, by the one or more processors, the hindsight route for traveling from the starting location (202) to the destination location in the shortest amount of time using the determined amounts of time for traversing the road segments.

8. The method of claim 7, further comprising:
determining, by the one or more processors (62), a speed value for each road segment (254, 256, 258, 260, 262, 264, 266, 268, 270, 272, 274) based on the positioning data at the plurality of instances of time on the road segment;
determining, by the one or more processors, an amount of time for traversing each road segment based on the speed value for the road segment; and
determining, by the one or more processors, the hindsight route for traveling from the starting location (202) to the destination location (212) in the shortest amount of time by identifying a combination of road segments from the starting location to the destination location that minimizes a total amount of time to the destination location.

9. A server device for evaluating performance of a navigation application that identifies optimal routes to destination locations (212), the server device comprising:
one or more processors (62); and
a non-transitory computer-readable memory (64) coupled to the one or more processors and storing instructions thereon that, when executed by the one or more processors, cause the server device to carry out the method of any of claims 1 to 3 or 5 to 8.

10. The server device of claim 9, wherein the instructions further cause the server device to:
identify errors in route determination methods performed by the navigation application based on the overall performance metric; and
determine a cause of the errors in the route determination methods to perform corrective actions.

11. A non-transitory computer-readable medium (64) storing instructions that, when executed by one or more processors (62) in a computing device, cause the one or more processors to carry out the method of any of claims 1 to 3 or 5 to 8.

12. The computer-readable medium of claim 11, wherein the instructions further cause the one or more processors (62) to:
identify errors in route determination methods performed by the navigation application based on the overall performance metric; and
determine a cause of the errors in the route determination methods to perform corrective actions.

## Patentansprüche

1. Verfahren zum Bewerten der Leistung einer Navigationsanwendung, die optimale Routen zu Zielorten (212) feststellt, wobei das Verfahren umfasst:
für jede von mehreren Routen, die durch eine Navigationsanwendung zu mehreren Zielorten erzeugt werden:
Empfangen (402), an einem oder mehreren Prozessoren (62), einer Angabe der Route, die durch die Navigationsanwendung erzeugt wurde, als Reaktion auf eine Anforderung von Navigationsanweisungen von einem Startort (202) zu einem Zielort, die mehrere Straßensegmente (254, 256, 258, 260, 262, 264, 266, 268, 270, 272, 274) enthalten, durch einen Benutzer;
Bestimmen (408), durch den einen oder die mehreren Prozessoren, einer nachträglichen Route zum Fahren von dem Startort zu dem Zielort in einer kürzesten Zeitdauer zu einer Zeit, zu welcher der Benutzer die Navigationsanweisungen angefordert hat, basierend auf tatsächlichen Zeitdauern zum Zurücklegen der mehreren Straßensegmente und zum Zurücklegen alternativer Straßensegmente, wobei die nachträgliche Route bestimmt wird, nachdem der Benutzer an dem Zielort angekommen ist;
Vergleichen (410), durch den einen oder die mehreren Prozessoren, der Route mit der nachträglichen Route, um eine Leistungsmetrik für die Route zu bestimmen (412); und
Bereitstellen, durch den einen oder die mehreren Prozessoren, einer Gesamtleistungsmetrik für die Navigationsanwendung basierend auf den Leistungsmetriken für jede der mehreren Routen.

2. Verfahren nach Anspruch 1, ferner umfassend:
Empfangen, an dem einen oder den mehreren Prozessoren (62), einer Angabe einer vorhergesagten Zeitdauer zum Zurücklegen der Route, die zu dem Zeitpunkt berechnet wurde, zu dem der Benutzer die Navigationsanweisungen angefordert hat;
Empfangen (404), an den einen oder den mehreren Prozessoren, einer Angabe einer tatsächlichen Zeitdauer, die zum Zurücklegen der Route benötigt wurde und die berechnet wurde, nachdem der Benutzer an dem Zielort (212) angekommen ist; und
Vergleichen (410), durch den einen oder die mehreren Prozessoren, der vorhergesagte Zeitdauer zum Zurücklegen der Route mit der tatsächlichen Zeitdauer, die zum Zurücklegen der Route benötigt wurde, um die Leistungsmetrik für die Route zu bestimmen (412).

3. Verfahren nach Anspruch 2, wobei das Vergleichen (410) der Route mit der nachträglichen Route, um eine Leistungsmetrik für die Route zu bestimmen (412), Bestimmen, durch den einen oder die mehreren Prozessoren (62), der Leistungsmetrik basierend auf mindestens einem der Folgenden enthält:
einer Anzahl von Straßensegmenten (254, 256, 258, 260, 262, 264, 266, 268, 270, 272, 274), die sowohl in der Route als auch der nachträglichen Route enthalten sind;
einer Anzahl von alternativen Straßensegmenten, die in der nachträglichen Route enthalten sind;
einer Differenz zwischen der vorhergesagten Zeitdauer zum Zurücklegen der Route und der tatsächlichen Zeitdauer, die zum Zurücklegen der Route benötigt wurde;
einer Differenz zwischen der tatsächlichen Zeitdauer, die zum Zurücklegen der Route benötigt wurde, und einer Zeitdauer, die zum Zurücklegen der nachträglichen Route benötigt worden wäre; oder
einer Differenz zwischen der vorhergesagten Zeitdauer zum Zurücklegen der Route und der Zeitdauer, die zum Zurücklegen der nachträglichen Route benötigt worden wäre.

4. Verfahren nach Anspruch 1, ferner umfassend:
Feststellen, durch den einen oder die mehreren Prozessoren (62), von Fehlern bei Routenbestimmungsverfahren, die von der Navigationsanwendung durchgeführt werden, basierend auf der Gesamtleistungsmetrik und Diskrepanzen zwischen den mehreren Routen, die durch die Navigationsanwendung erzeugt werden, und den nachträglichen Routen; und
Bestimmen, durch den einen oder die mehreren Prozessoren, einer Ursache für die Fehler bei den Routenbestimmungsverfahren, um Korrekturmaßnahmen durchzuführen.

5. Verfahren nach Anspruch 4, wobei das Feststellen von Fehlern bei Routenbestimmungsverfahren, die durch die Navigationsanwendung durchgeführt werden, Folgendes enthält:
Bestimmen, dass die Leistungsmetrik für die Route unter einem Schwellenwert liegt;
Analysieren der Route, um festzustellen, dass ein Straßensegment (254, 256, 258, 260, 262, 264, 266, 268, 270, 272, 274) auf der Route eine längere tatsächliche Fahrzeit als eine vorhergesagte Fahrzeit aufweist; und
Feststellen eines Fehlers in der vorhergesagten Fahrzeit für das Straßensegment.

6. Verfahren nach Anspruch 1, ferner umfassend:
Anpassen, durch den einen oder die mehreren Prozessoren (62), eines Routenbestimmungsmodells zum Feststellen von Routen zu Zielorten (212) basierend auf der Gesamtleistungsmetrik.

7. Verfahren nach Anspruch 1, wobei das Bestimmen einer nachträglichen Route Folgendes enthält:
Empfangen, an dem einen oder den mehreren Prozessoren (62), von Positionsbestimmungsdaten von einer oder mehreren Rechenvorrichtungen zu mehreren Zeitpunkten innerhalb eines gleichen Zeitraums wie eines Zeitraums, in dem ein Benutzer die Route zu dem Zielort (212) zurückgelegt hat;
Analysieren, durch den einen oder die mehreren Prozessoren, der Positionsbestimmungsdaten zu den mehreren Zeitpunkten, um Zeitdauern zum Zurücklegen von Straßensegmenten (254, 256, 258, 260, 262, 264, 266, 268, 270, 272, 274) zu bestimmen; und
Bestimmen, durch den einen oder die mehreren Prozessoren, der nachträglichen Route zum Fahren von dem Startort (202) zu dem Zielort in der kürzesten Zeitdauer unter Verwendung der bestimmten Zeitdauern zum Zurücklegen der Straßensegmente.

8. Verfahren nach Anspruch 7, ferner umfassend:
Bestimmen, durch den einen oder die mehreren Prozessoren (62), eines Geschwindigkeitswertes für jedes Straßensegment (254, 256, 258, 260, 262, 264, 266, 268, 270, 272, 274) basierend auf den Positionsbestimmungsdaten zu den mehreren Zeitpunkten auf dem Straßensegment;
Bestimmen, durch den einen oder die mehreren Prozessoren, einer Zeitdauer zum Zurücklegen jedes Straßensegments basierend auf dem Geschwindigkeitswert für das Straßensegment; und
Bestimmen, durch den einen oder die mehreren Prozessoren, der nachträglichen Route zum Fahren von dem Startort (202) zu dem Zielort (212) in der kürzesten Zeitdauer durch Feststellen einer Kombination von Straßensegmenten von dem Startort zu dem Zielort, welche eine Gesamtzeit bis zu dem Zielort minimiert.

9. Servervorrichtung zum Bewerten der Leistung einer Navigationsanwendung, die optimale Routen zu Zielorten (212) feststellt, wobei die Servervorrichtung umfasst:
einen oder mehrere Prozessoren (62); und
einen dauerhaften computerlesbaren Speicher (64), der mit dem einen oder den mehreren Prozessoren gekoppelt ist und auf dem Anweisungen gespeichert sind, die bei Ausführung durch den einen oder die mehreren Prozessoren die Servervorrichtung dazu veranlassen, das Verfahren nach einem der Ansprüche 1 bis 3 oder 5 bis 8 auszuführen.

10. Servervorrichtung nach Anspruch 9, wobei die Anweisungen die Servervorrichtung ferner veranlassen zum:
Feststellen von Fehlern bei Routenbestimmungsverfahren, die durch die Navigationsanwendung durchgeführt werden, basierend auf der Gesamtleistungsmetrik; und
Bestimmen einer Ursache für die Fehler bei den Routenbestimmungsverfahren, um Korrekturmaßnahmen durchzuführen.

11. Dauerhaftes, computerlesbares Medium (64), auf dem Anweisungen gespeichert sind, die bei Ausführung durch einen oder mehrere Prozessoren (62) in einer Rechenvorrichtung den einen oder die mehreren Prozessoren dazu veranlassen, das Verfahren nach einem der Ansprüche 1 bis 3 bis oder 5 bis 8 auszuführen.

12. Computerlesbares Medium nach Anspruch 11, wobei die Anweisungen den einen oder die mehreren Prozessoren (62) ferner veranlassen zum:
Feststellen von Fehlern bei Routenbestimmungsverfahren, die durch die Navigationsanwendung durchgeführt werden, basierend auf der Gesamtleistungsmetrik; und
Bestimmen einer Ursache für die Fehler bei den Routenbestimmungsverfahren, um Korrekturmaßnahmen durchzuführen.

## Revendications

1. Procédé permettant l'évaluation des performances d'une application de navigation qui identifie des itinéraires optimaux vers des emplacements de destination (212), le procédé comprenant :
pour chacun d'une pluralité d'itinéraires générés par une application de navigation vers une pluralité d'emplacements de destination :
la réception (402), au niveau d'un ou de plusieurs processeurs (62), d'une indication de l'itinéraire généré par l'application de navigation en réponse à une demande par un utilisateur de directions de navigation à partir d'un emplacement de départ (202) jusqu'à un emplacement de destination comprenant une pluralité de segments de route (254, 256, 258, 260, 262, 264, 266, 268, 270, 272, 274) ;
la détermination (408), par le ou les processeurs, d'un itinéraire à posteriori pour voyager à partir de l'emplacement de départ jusqu'à l'emplacement de destination dans une quantité de temps la plus petite à un moment où l'utilisateur a demandé les directions de navigation sur la base des quantités de temps réelles pour parcourir la pluralité de segments de route et pour parcourir des segments de route alternatifs, ledit itinéraire à postériori étant déterminé après que l'utilisateur est arrivé à l'emplacement de destination ;
la comparaison (410), par le ou les processeurs, de l'itinéraire à l'itinéraire à postériori pour déterminer (412) une métrique de performance pour l'itinéraire ; et
la fourniture, par le ou les processeurs, d'une métrique de performance globale pour l'application de navigation sur la base des métriques de performance pour chacun de la pluralité d'itinéraires.

2. Procédé selon la revendication 1, comprenant en outre :
la réception, au niveau du ou des processeurs (62), d'une indication d'une quantité de temps prédite pour parcourir l'itinéraire qui a été calculé au moment où l'utilisateur a demandé les directions de navigation ;
la réception (404), au niveau du ou des processeurs, d'une indication d'une quantité de temps réelle qui a été nécessaire pour parcourir l'itinéraire qui a été calculé après que l'utilisateur est arrivé à l'emplacement de destination (212) ; et
la comparaison (410), par le ou les processeurs, de la quantité de temps prédite pour parcourir l'itinéraire à la quantité de temps réelle qui a été nécessaire pour parcourir l'itinéraire pour déterminer (412) la métrique de performance pour l'itinéraire.

3. Procédé selon la revendication 2, ladite comparaison (410) de l'itinéraire à l'itinéraire à postériori pour déterminer (412) une métrique de performance pour l'itinéraire comprenant la détermination, par le ou les processeurs (62), de la métrique de performance sur la base d'au moins l'un parmi :
un nombre de segments de route (254, 256, 258, 260, 262, 264, 266, 268, 270, 272, 274) compris à la fois dans l'itinéraire et dans l'itinéraire à postériori ;
un nombre de segments de route alternatifs compris dans l'itinéraire à postériori ;
une différence entre la quantité de temps prédite pour parcourir l'itinéraire et la quantité de temps réelle qui a été nécessaire pour parcourir l'itinéraire ;
une différence entre la quantité de temps réelle qui a été nécessaire pour parcourir l'itinéraire et la quantité de temps qui aurait été nécessaire pour parcourir l'itinéraire à postériori ; ou
une différence entre la quantité de temps prédite pour parcourir l'itinéraire et la quantité de temps qui aurait été nécessaire pour parcourir l'itinéraire à postériori.

4. Procédé selon la revendication 1, comprenant en outre :
l'identification, par le ou les processeurs (62), des erreurs dans les procédés de détermination d'itinéraire réalisés par l'application de navigation sur la base de la métrique de performance globale et des écarts entre la pluralité d'itinéraires générés par l'application de navigation et les itinéraires à postériori ; et
la détermination, par le ou les processeurs, d'une cause des erreurs dans les procédés de détermination d'itinéraire pour réaliser des actions correctives.

5. Procédé selon la revendication 4, ladite identification des erreurs dans les procédés de détermination d'itinéraire réalisés par l'application de navigation comprenant :
la détermination que la métrique de performance pour l'itinéraire est inférieure à une valeur seuil ;
l'analyse de l'itinéraire pour identifier qu'un segment de route (254, 256, 258, 260, 262, 264, 266, 268, 270, 272, 274) sur l'itinéraire possédant un temps de parcours réel plus long qu'un temps de parcours prédit ; et
l'identification d'une erreur dans le temps de parcours prédit pour le segment de route.

6. Procédé selon la revendication 1, comprenant en outre :
le réglage, par le ou les processeurs (62), d'un modèle de détermination d'itinéraire en vue de l'identification d'itinéraires vers des emplacements de destination (212) sur la base de la métrique de performance globale.

7. Procédé selon la revendication 1, ladite détermination d'un itinéraire à postériori comprenant : la réception, au niveau du ou des processeurs (62), des données de positionnement en provenance d'un ou de plusieurs dispositifs informatiques à une pluralité d'instances de temps dans une même période de temps qu'une période de temps durant laquelle un utilisateur a parcouru l'itinéraire jusqu'à l'emplacement de destination (212) ;
l'analyse, par le ou les processeurs, des données de positionnement à la pluralité d'instances de temps pour déterminer des quantités de temps pour parcourir des segments de route (254, 256, 258, 260, 262, 264, 266, 268, 270, 272, 274) ; et
la détermination, par le ou les processeurs, de l'itinéraire à postériori pour voyager à partir de l'emplacement de départ (202) jusqu'à l'emplacement de destination dans la quantité de temps la plus petite à l'aide des quantités de temps déterminées pour parcourir les segments de route.

8. Procédé selon la revendication 7, comprenant en outre :
la détermination, par le ou les processeurs (62), d'une valeur de vitesse pour chaque segment de route (254, 256, 258, 260, 262, 264, 266, 268, 270, 272, 274) sur la base des données de positionnement au niveau de la pluralité d'instances de temps sur le segment de route ;
la détermination, par le ou les processeurs, d'une quantité de temps pour parcourir chaque segment de route sur la base de la valeur de vitesse pour le segment de route ; et
la détermination, par le ou les processeurs, de l'itinéraire à postériori pour voyager de l'emplacement de départ (202) à l'emplacement de destination (212) dans la quantité de temps la plus petite en identifiant une combinaison de segments de route à partir de l'emplacement de départ jusqu'à l'emplacement de destination qui minimise une quantité de temps totale jusqu'à l'emplacement de destination.

9. Dispositif serveur destiné à l'évaluation des performances d'une application de navigation qui identifie des itinéraires optimaux vers des emplacements de destination (212), le dispositif serveur comprenant :
un ou plusieurs processeurs (62) ; et
une mémoire non transitoire lisible par ordinateur (64) couplée au ou aux processeurs et stockant des instructions sur celle-ci qui, lorsqu'elles sont exécutées par le ou les processeurs, amènent le dispositif serveur à effectuer le procédé selon l'une quelconque des revendications 1 à 3 ou 5 à 8.

10. Dispositif serveur selon la revendication 9, lesdites instructions amenant en outre le dispositif serveur à :
identifier des erreurs dans les procédés de détermination d'itinéraire réalisés par l'application de navigation sur la base de la métrique de performance globale ; et
déterminer une cause des erreurs dans les procédés de détermination d'itinéraire pour réaliser des actions correctives.

11. Support non transitoire lisible par ordinateur (64) stockant des instructions qui, lorsqu'elles sont exécutées par un ou plusieurs processeurs (62) dans un dispositif informatique, amènent le ou les processeurs à effectuer le procédé selon l'une quelconque des revendications 1 à 3 ou 5 à 8.

12. Support lisible par ordinateur selon la revendication 11, lesdites instructions amenant en outre le ou les processeurs (62) à :
identifier des erreurs dans les procédés de détermination d'itinéraire réalisés par l'application de navigation sur la base de la métrique de performance globale ; et
déterminer une cause des erreurs dans les procédés de détermination d'itinéraire pour réaliser des actions correctives.
